# FASCICULE DE BREVET EUROPEEN

(11) **EP 3 922 487 B1**
(45) Date de publication et mention de la délivrance du brevet: **23.04.2025**
(21) Numéro de dépôt: 21176974.0
(22) Date de dépôt: 31.05.2021
(51) Int. Cl.: B60D 1/48, B62D 53/00, B62D 59/04

(54) **DISPOSITIF D'ATTELAGE AMELIORE COMPORTANT QUATRE DEGRES DE LIBERTE**
VERBESSERTE ANKUPPLUNGSVORRICHTUNG MIT VIER FREIHEITSGRADEN
IMPROVED COUPLING DEVICE COMPRISING FOUR DEGREES OF FREEDOM

(30) Priorité: 08.06.2020 FR 2005969
(43) Date de publication de la demande: 15.12.2021
(73) Titulaire: Lohr Industrie, 67980 Hangenbieten (FR)
(72) Inventeur: SCHEER, Daniel, 67190 STILL (FR); GANTER, Didier, 67640 FEGERSHEIM (FR); SUTTER, Nicolas, STRASBOURG 67100 (FR); PIERROU, Vincent, 67200 STRASBOURG (FR)
(74) Mandataire: Merckling, Norbert

(56) Documents cités:
- EP-A1- 3 638 521
- WO-A1-2019/104436
- WO-A2-2011/100198
- US-A- 2 552 885
- US-A- 4 029 333

## Description

### Domaine technique

La présente invention se rapporte à un dispositif d' attelage prévu pour atteler deux véhicules routiers comportant chacun au moins deux essieux. Ce dispositif d'attelage comprend une chape d'attelage solidaire d'un véhicule et un timon d'attelage solidaire de l'autre véhicule, ce timon d'attelage comportant une pièce d'attelage prévue pour être verrouillée dans la chape d'attelage afin d'atteler les deux véhicules.

L'invention concerne plus particulièrement un dispositif d'attelage comportant des dispositifs de débattement autorisant des degrés de liberté de mouvements pour les véhicules, ces mouvements étant préférentiellement amortis, mais sans introduire de risque de défaillance de l'attelage.

### Technique antérieure

Il est connu d'atteler deux véhicules routiers par l'intermédiaire d'un dispositif d'attelage comportant un timon d'attelage qui est fixé par chacune de ses extrémités à un véhicule. L'un de ces véhicules est habituellement un véhicule tracteur, qui est motorisé et qui entraîne derrière lui le second véhicule auquel il est attelé, ce second véhicule étant désigné en tant que véhicule tracté ou suiveur.

Lors des virages, il est nécessaire que l'ensemble formé par les deux véhicules attelés puisse s'adapter à la courbe du virage, aussi ce type de dispositif d'attelage comporte habituellement des moyens de débattement permettant généralement au véhicule suiveur de pivoter dans un plan horizontal par rapport au véhicule tracteur. On parle alors de débattement en lacet d'un véhicule par rapport à l'autre.

Lorsque les deux véhicules attelés circulent par exemple sur une route comportant des dos d'âne, ils s'inclinent chacun successivement vers le haut, puis vers le bas. En raison de la nature généralement rigide et indéformable du timon d'attelage, il est nécessaire que le dispositif d'attelage comporte des moyens de débattement permettant généralement aux deux véhicules de pivoter vers l'avant et vers l'arrière l'un par rapport à l'autre dans un plan vertical. On parle alors de débattement en tangage d'un véhicule par rapport à l'autre.

Enfin, les deux véhicules attelés circulent par exemple sur une route présentant des nids de poule, ils sont susceptibles de s'incliner latéralement. Là encore, il est nécessaire que le dispositif d'attelage comporte des moyens de débattement permettant généralement aux deux véhicules de pivoter latéralement l'un par rapport à l'autre dans un plan vertical. On parle alors de débattement en roulis d'un véhicule par rapport à l'autre.

Par le document WO 2007/132121 on connaît un véhicule autonome pouvant être attelé avec un autre véhicule identique au moyen d'un dispositif d'attelage qui comporte plusieurs dispositifs de débattement distincts. De même, par le document EP 2875971 on connaît un véhicule tracteur pouvant être attelé avec des chariots au moyen d'un dispositif d'attelage qui comporte plusieurs dispositifs de débattement distincts.

Par le document US 4029333 A on connait un chariot d'entrepôt réversible pourvu d'un plateau articulé, de roues de support centrales montées en tandem, de roues directrices supportant les deux extrémités du plateau et de moyens d'attelage aux deux extrémités du plateau pour fournir un chariot d'entrepôt qui peut être remorqué à partir de l'une ou l'autre extrémité. Les moyens d'attelage comportent deux ensembles de connexion et d'articulation juxtaposés comprenant chacun une paire de rondelles élastiques. Ep 3638521 A1 divulgue aussi un tel dispositif d'attelage.

Dans les dispositifs d'attelage connus, les différents débattements décrits ci-dessus sont habituellement autorisés par des moyens de débattement qui autorisent chacun plusieurs degrés de liberté de mouvement pour les véhicules en combinant plusieurs types de débattements. Parmi les exemples les plus connus, on peut citer les dispositifs d'attelage à boule ou à rotule.

Généralement, pour des raisons d'encombrement, ces dispositifs d'attelage ne permettent pas d'amortir ou de raidir les débattements qu'ils autorisent lorsque plusieurs types de débattements sont combinés au niveau d'une même articulation. En effet, du fait qu'elle autorise plusieurs types de débattements combinés, une telle articulation ne présente généralement pas de place suffisante pour l'équiper de moyens d'amortissement ou de raidissement pour les différents débattements qui soient satisfaisants notamment du point de vue de leur fiabilité, du confort des passagers et de la sécurité, à la fois des véhicules, du dispositif d'attelage et des passagers.

Or, il est connu que l'absence de moyens d'amortissement satisfaisants des débattements notamment en lacet puisse provoquer un comportement dangereux pour le véhicule suiveur. Ainsi, les mouvements de lacet du véhicule suiveur peuvent notamment s'amplifier par effet de résonnance, faire louvoyer ledit véhicule suiveur et provoquer la détérioration du dispositif d'attelage, voire le renversement du véhicule suiveur.

En outre, les dispositifs d'attelage connus ne prévoient généralement qu'un seul débattement en tangage d'un véhicule par rapport à l'autre. De fait, lors du passage sur un dos d'âne, le tangage d'un véhicule provoque le tangage du véhicule auquel il est attelé, de manière généralement très inconfortable.

Ces problèmes deviennent encore plus critiques dans le cas ou plus de deux véhicules routiers sont attelés à la suite les uns des autres pour former un train routier.

En outre, les dispositifs d'attelage connus ont souvent un coût de maintenance élevé. En effet, les dispositifs d'attelage connus peuvent aussi présenter un jeu mécanique, ce qui n'est pas souhaitable fonctionnellement. Pour réduire les jeux mécaniques, on intègre des pièces de frottement, du genre patins, qui nécessitent un remplacement fréquent.

Les dispositifs d'attelage connus peuvent aussi présenter un jeu mécanique ce qui n'est pas souhaitable.

En conséquence il existe un besoin pour un dispositif d'attelage permettant de répondre aux problèmes évoqués précédemment et ce sans altérer la stabilité du convoi.

Par ailleurs, une fois le véhicule tracté dételé, il est nécessaire de rétracter le timon et d'immobiliser par accrochage le timon, en le relevant. Cette opération ne peut être entamée tant que le timon n'est pas dans une position centrée ou neutre. Ceci s'avère problématique car rien n'empêche de dételer le véhicule tracté en courbe.

### Présentation de l'invention

L'objet de l'invention vise par conséquent à pallier les inconvénients de l'art antérieur en proposant un nouveau dispositif d'attelage comportant des dispositifs de débattement de manière simple, économique et fiable.

Un autre objet de l'invention réside dans la fourniture d'un dispositif d'attelage permettant de garantir une stabilité du convoi, notamment lors de déplacements avec une vitesse proche de la limite autorisée.

Un autre objet de l'invention vise à faciliter et à diminuer les opérations de maintenance du dispositif d'attelage.

Un autre objet de l'invention vise à faciliter l'automatisation des opérations d'attelage.

Un autre objet de l'invention vise à fournir un nouveau dispositif d'attelage permettant de recentrer le timon du véhicule une fois dételé.

Les objets assignés à l'invention sont atteints à l'aide d'un dispositif d'attelage apte à être prévu entre un premier et un second véhicules routiers pour atteler ces deux véhicules, ces deux véhicules comportant chacun au moins deux essieux, ledit dispositif d'attelage comprenant une chape d'attelage apte à être solidaire du premier véhicule routier et un timon d'attelage apte à être solidaire du second véhicule routier, la chape d'attelage étant prévue dans une traverse apte à équiper le premier véhicule routier, cette traverse étant apte à être montée pivotante sur le premier véhicule routier selon un premier axe horizontal transversal à un axe longitudinal du timon d'attelage, par au moins une articulation, le timon d'attelage et la traverse comportant chacun une extrémité proximale apte à être fixée à son véhicule respectif et une extrémité distale, ces extrémités distales étant prévues pour être mutuellement solidarisées lors de l'attelage des deux véhicules, ledit dispositif d'attelage comprenant :
- un dispositif de débattement en roulis d'un véhicule par rapport à l'autre ;
- un dispositif de débattement en lacet d'un véhicule par rapport à l'autre ;
- un premier dispositif de débattement en tangage du premier véhicule routier par rapport à la chape d'attelage ;
- un second dispositif de débattement en tangage du second véhicule routier par rapport à l'extrémité distale du timon d'attelage, ledit second dispositif de débattement en tangage étant distinct et décalé du premier dispositif de débattement en tangage formé par l'au moins une articulation,
caractérisé en ce que le dispositif de débattement en roulis, le dispositif de débattement en lacet et le second dispositif de débattement en tangage sont intégrés dans un unique mécanisme à rotule.

Selon un exemple de réalisation, le mécanisme à rotule comprend un boîtier solidaire mécaniquement du timon d'attelage et pourvu d'une ouverture supérieure et d'une ouverture inférieure, une tige solidaire mécaniquement du châssis et traversant le boîtier, ladite tige présentant une bague à protubérance sphérique localisée à l'intérieur du boitier et les ouvertures supérieure et inférieure étant dimensionnées pour autoriser un mouvement du boîtier selon trois degrés de liberté de rotation.

Selon un exemple de réalisation, le boîtier intègre une interface de rotation enveloppant la protubérance sphérique comprenant une entretoise élastique et une douille solidaire du boîtier et enveloppant ladite entretoise.

Selon un exemple de réalisation, le dispositif de débattement en roulis est prévu dans le timon d'attelage pour autoriser un débattement en roulis du second véhicule routier dans l'axe longitudinal du timon d'attelage, le dispositif de débattement en lacet est prévu dans le timon d'attelage pour autoriser un débattement en lacet du second véhicule routier selon un axe vertical passant par le timon d'attelage et le centre du mécanisme à rotule, et le second dispositif de débattement en tangage est prévu dans le timon d'attelage pour autoriser un débattement en tangage du second véhicule routier selon un second axe horizontal transversal à l'axe longitudinal du timon d'attelage.

Selon un exemple de réalisation, le dispositif de débattement en lacet comprend un dispositif d'amortissement en lacet.

Selon un exemple de réalisation, le dispositif d'amortissement en lacet comprend un bras solidaire du timon d'attelage, articulée avec une extrémité sur le mécanisme à rotule, s'étendant dans le prolongement de l'extrémité proximale dudit timon d'attelage, le bras étant reliée au châssis du véhicule correspondant par l'intermédiaire d'un vérin hydraulique double-effet comportant un corps et une tige.

Selon un exemple de réalisation, le dispositif d'amortissement comprend un accumulateur hydraulique et un circuit hydraulique de commande associés au vérin hydraulique double-effet, lequel comporte une grande chambre et une petite chambre séparées par l'intermédiaire d'un piston monté sur une extrémité de la tige, les chambres communiquant entre-elles par l'intermédiaire d'une valve d'équilibrage et d'un limiteur de débit unidirectionnel.

Selon un exemple de réalisation, le dispositif d'attelage comprend un système de recentrage du timon d'attelage.

Selon un exemple de réalisation, le système de recentrage comprend un piston flottant monté coulissant sur la tige, un anneau solidaire et en saillie sur la tige pour entrainer le piston flottant et pour être entrainé par le piston flottant, ledit piston flottant se déplaçant entre une extrémité du corps et une butée interne au corps, définissant la position de recentrage du timon, et une alimentation hydraulique spécifique alimentant une chambre de recentrage délimitée longitudinalement par l'extrémité du corps de piston et le piston flottant.

Selon un exemple de réalisation, le premier véhicule routier est un véhicule tracteur et en ce que le second véhicule routier est un véhicule suiveur ou tracté.

Les objets assignés à l'invention sont également atteints à l'aide d'un véhicule routier prévu pour être attelé avec un autre véhicule routier identique ou similaire, par l'intermédiaire d'un dispositif d'attelage tel que décrit ci-dessus, pour former un ensemble routier comprenant au moins deux véhicules, caractérisé en ce que chacun des véhicules dudit ensemble routier comporte une chape d'attelage à une extrémité avant ou arrière et un timon d'attelage à l'extrémité opposée.

Avantageusement, le véhicule routier comporte un timon d'attelage à l'avant et une chape d'attelage à l'arrière.

Un avantage du dispositif d'attelage conforme à l'invention est obtenu par sa fiabilité, résultant notamment d'un nombre très réduit de pièces en mouvement les unes par rapport aux autres pour assurer l'ensemble des degrés de liberté.

En outre, la fourniture de deux dispositifs de débattement en tangage distincts et décalés dans le dispositif d'attelage conforme à l'invention, permet d'obtenir un décalage en hauteur des deux véhicules attelés.

Un autre avantage de l'invention, réside dans la diminution des opérations de graissage. En effet, seul de dispositif de débattement en lacet nécessite un graissage, contrairement aux autres dispositifs de débattement.

En outre, le dispositif d'attelage conforme à l'invention ne présente pas de jeu mécanique significatif et ne nécessite donc pas d'opérations de maintenance pour réduire un tel jeu au minimum, comme cela est le cas pour les dispositifs connus.

L'utilisation d'un vérin hydraulique pour réaliser l'amortissement en lacet permet avantageusement d'éviter les limitations des débattements en tangage que présentent les dispositifs d'amortissement d'attelage connus.

Un autre avantage est lié à l'utilisation du dispositif d'amortissement et notamment du vérin hydraulique d'amortissement / stabilisation pour constituer en partie un système de recentrage du timon. Un simple rajout d'une fonction simple effet au système d'amortissement permet de mettre en œuvre de façon simple et efficace la fonction de recentrage du timon.

En outre, la modification du système d'amortissement pour intégrer un système de recentrage conforme à l'invention, n'augmente pas, de façon aussi remarquable qu'inattendu, l'encombrement du système d'amortissement et n'altère aucunement sa fiabilité.

### Brève description des figures

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue de dessus d'un exemple de réalisation d'un dispositif d'attelage conforme à l'invention,
- la figure 2 est une vue de profil, en coupe verticale, du dispositif d'attelage de la figure 1,
- la figure 3a est une vue agrandie, en coupe verticale d'une partie du dispositif d'attelage illustré à la figure 2,
- la figure 3b est une vue en perspective d'un exemple de réalisation d'un dispositif d'attelage conforme à l'invention,
- la figure 4 est une illustration en perspective de deux véhicules équipés d'un dispositif d'attelage conforme à l'invention, avant leur attelage,
- la figure 5, est une illustration en perspective de deux véhicules équipés d'un dispositif d'attelage conforme à l'invention, une fois attelés,
- les figures 6 à 9, sont des vues en coupe du vérin d'amortissement d'un dispositif d'attelage conforme à l'invention, dans des configurations de fonctionnement différentes, et
- la figure 10, est une illustration d'un exemple de circuit hydraulique pour piloter le fonctionnement du vérin d'amortissement d'un dispositif d'attelage conforme à l'invention.

### Description détaillée de l'invention

Les éléments structurellement et fonctionnellement identiques présents sur plusieurs figures distinctes, sont affectés d'une même référence numérique ou alphanumérique.

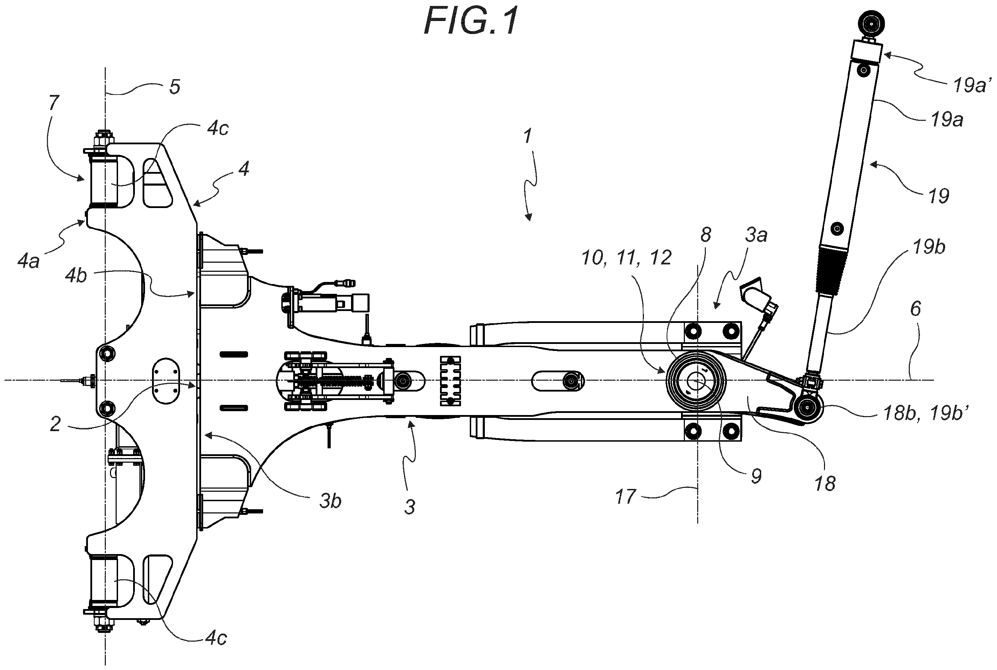

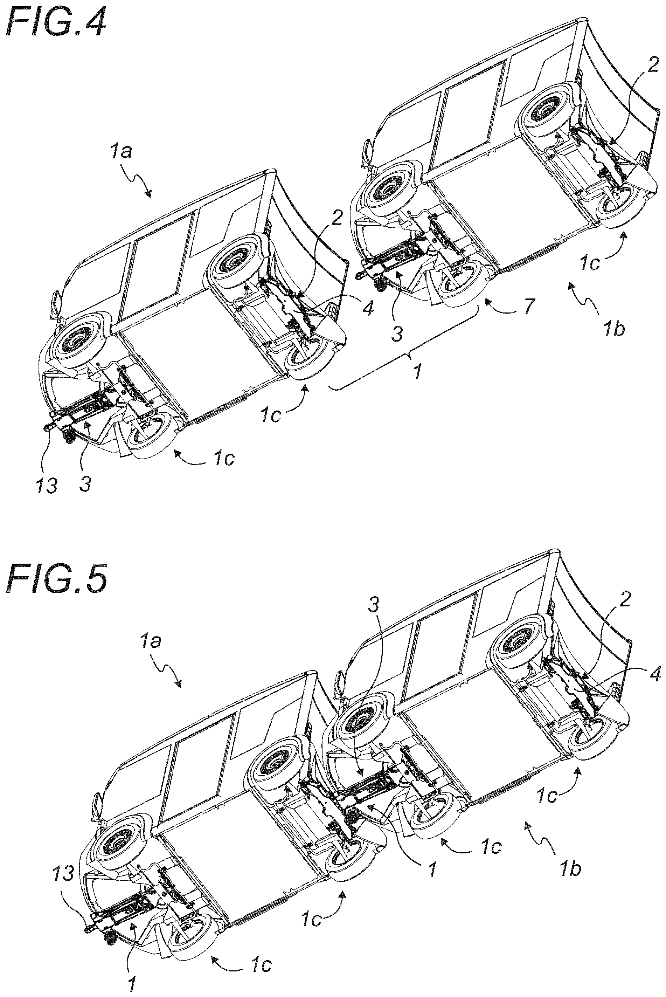

La figure 1 est une vue de dessus d'un exemple de réalisation d'un dispositif d'attelage 1. Ce dernier est prévu pour être positionné entre un premier véhicule routier la et un second véhicule routier 1b adjacent pour atteler lesdits deux véhicules. Les véhicules la et 1b sont illustrés par exemple aux figures 4 et 5.

Les deux véhicules la et 1b sont avantageusement identiques et comportent chacun au moins deux essieux 1c.

Le dispositif d'attelage 1 comprend une chape d'attelage 2 à l'arrière, solidaire du premier véhicule routier la et un timon d'attelage 3 solidaire du second véhicule routier 1b à l'avant.

Le premier véhicule routier la comprend une traverse 4 comportant la chape d'attelage 2.

Le timon d'attelage 3 et la traverse 4 présentent respectivement une extrémité proximale 3a et 4a prévues pour être reliées à leur véhicule respectif et une extrémité distale 3b et 4b, ces extrémités distales 3b et 4b étant prévues pour être mutuellement solidarisées lors de l'attelage des deux véhicules 1a, 1b.

La traverse 4 est montée pivotante sur le premier véhicule routier la selon un premier axe horizontal 5 transversal à un axe longitudinal 6 du timon d'attelage 3, par au moins une articulation 4c formant un premier dispositif de débattement en tangage 7. Deux articulations 4c sont représentées à la figure 1.

L'extrémité proximale 3a du timon d'attelage 3 est avantageusement articulée sur un châssis 1d du second véhicule routier 1b par l'intermédiaire d'un mécanisme à rotule 8. Ce mécanisme à rotule 8 présente notamment un axe de rotation vertical 9, orthogonal à l'axe longitudinal 6 et orthogonal à l'axe horizontal 5, pour permettre notamment un débattement en lacet du timon d'attelage 3 par rapport au châssis 1d du véhicule 1b sur lequel il est articulé.

Le mécanisme à rotule 8 intègre avantageusement un dispositif de débattement en roulis 10 d'un véhicule par rapport à l'autre, un dispositif de débattement en lacet 11 d'un véhicule par rapport à l'autre et un second dispositif de débattement en tangage 12 du second véhicule routier 1b par rapport à l'extrémité distale 3b du timon d'attelage 3, ladite extrémité distale 3b étant solidaire de la traverse 4. Le second dispositif de débattement en tangage 12 est ainsi localisé à distance du premier dispositif de débattement en tangage 7.

Selon un mode de réalisation, le premier véhicule routier la comprend la traverse 4 comportant la chape d'attelage 2. La traverse 4 est montée pivotante sur le premier véhicule routier la selon l'axe horizontal 5. Ainsi, la chape d'attelage 2 est montée pivotante sur le premier véhicule routier la selon ledit axe horizontal 5 fournissant ainsi le premier dispositif de tangage 7.

Chaque articulation 4c comprend par exemple au moins un palier monté à rotation sur un arbre transversal s'étendant selon ledit axe horizontal 5. Chaque articulation 4c comprend également un manchon monté en ajustement serré sur chaque palier, ledit manchon étant fixé au premier véhicule routier. L'arbre transversal est monté à rotation sur la traverse 4 par l'intermédiaire de paliers.

Le dispositif d'attelage 1 selon l'invention comprend avantageusement quatre degrés de liberté illustrés par exemple à la figure 1, à savoir un degré de liberté en lacet selon l'axe 9, un degré de liberté en roulis selon l'axe longitudinal 6 et deux degrés de liberté distincts en tangage selon l'axe transversal 5 et un autre axe transversal 17 passant par le mécanisme à rotule 8 et parallèle à l'axe transversal 5.

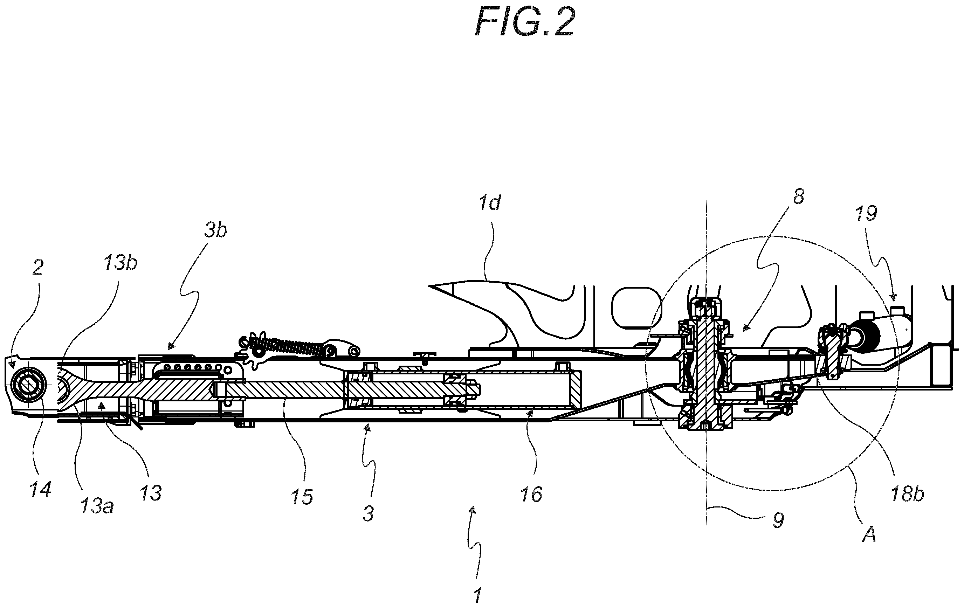

La figure 2 est une vue de profil, en coupe verticale d'un exemple de réalisation d'un dispositif d'attelage 1.

Au niveau de son extrémité distale 3b, le timon d'attelage 3 comporte une pièce d'attelage 13 prévue pour être verrouillée dans la chape d'attelage 2 afin d'atteler les deux véhicules routiers. La pièce d'attelage 13 est sous la forme d'un anneau vertical 13a comportant un orifice central 13b. La pièce d'attelage 13 est verrouillée dans la chape d'attelage 2 par la pénétration d'un arbre horizontal 14 mobile dans la traverse 4, lorsque ledit anneau vertical 13a est engagé dans la chape d'attelage 2.

Lorsque les deux véhicules la et 1b sont attelés (figure 5), la pièce d'attelage 13 est verrouillée dans la chape d'attelage 2, la traverse 4 et le timon d'attelage 3 sont mutuellement verrouillés de manière à former un seul ensemble.

Selon un mode de réalisation, la pièce d'attelage 13 est montée sur une tige mobile 15 d'un vérin d'attelage16 hydraulique logé dans le timon d'attelage 3.

Lorsque l'attelage entre les véhicules la et 1b est réalisé, la pression dans le vérin 16 est avantageusement maintenue pour établir une force de rétraction sur la tige 15 et maintenir ainsi la traverse 4 en rapprochement contre le timon d'attelage 3.

Par conséquent, lorsque deux véhicules la et 1b sont attelés par le dispositif d'attelage 1, l'extrémité distale 4b de la traverse 4 du premier véhicule routier la et l'extrémité distale 3b du timon d'attelage 3 du second véhicule routier 1b, sont en contact, mutuellement verrouillées et immobiles l'une par rapport à l'autre.

Ainsi, la traverse 4 et le timon d'attelage 3 sont fermement ancrés l'un contre l'autre et un premier pivotement suivant l'axe horizontal 5 de la traverse 4, laquelle est solidaire mécaniquement du timon d'attelage 3, peut s'effectuer au niveau d'une ou plusieurs articulations 4c formant le premier dispositif de débattement en tangage 7.

Selon un mode de réalisation, le premier dispositif de débattement en tangage 7 comprend en outre un dispositif raidisseur qui tend à ramener la traverse 4 dans une position où la chape d'attelage 2 n'est pas pivotée par rapport au premier véhicule routier la. Cette position est habituellement désignée en tant que débattement zéro en tangage. Dans cette position de débattement zéro en tangage, la traverse 4 est préférentiellement horizontale.

Le dispositif raidisseur peut comporter un bloc de caoutchouc qui est comprimé sur l'arbre et interposé entre les paliers et le manchon de chaque articulation 4c du premier dispositif de débattement en tangage 7. Ce type de raidisseur est également connu sous le nom de "silentbloc". C'est la déformation temporaire et élastique du bloc de caoutchouc qui freine le débattement en tangage. Cette déformation tend à ramener la traverse 4 en position de débattement zéro en tangage.

Un second pivotement de l'ensemble traverse 4 - timon d'attelage 3, dans un plan vertical, selon l'autre axe horizontal 17 parallèle à l'axe horizontal 5, peut s'effectuer au niveau du mécanisme à rotule 8. Ce dernier constitue ainsi le second dispositif de débattement en tangage 12.

Le second dispositif de débattement en tangage 12 est prévu dans le timon d'attelage 3 pour autoriser un débattement en tangage du second véhicule routier 1b selon l'autre axe horizontal 17, orthogonal à l'axe longitudinal 6 du timon d'attelage 3.

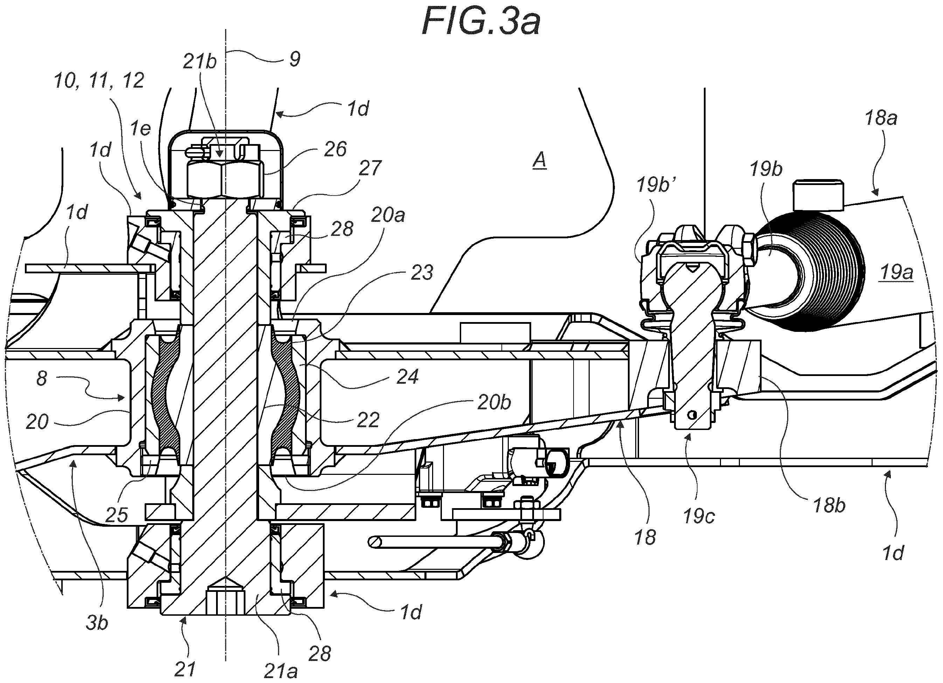

La figure 3a est une vue agrandie, en coupe verticale d'une partie du dispositif d'attelage 1, illustrant avec davantage de détails le mécanisme à rotule 8.

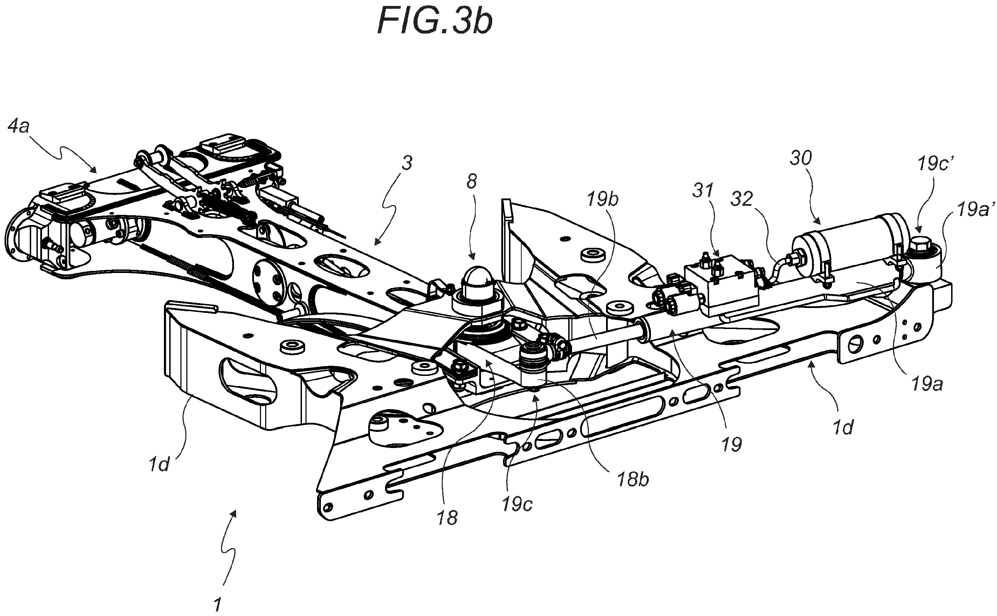

La figure 3b illustre, selon une vue en perspective, un exemple de réalisation du dispositif d'attelage 1.

Selon un exemple de réalisation, le mécanisme à rotule 8 comprend un boîtier 20 solidaire mécaniquement du timon d'attelage 3. Le boîtier 20 est pourvu d'une ouverture supérieure 20a et d'une ouverture inférieure 20b.

Une tige 21, solidaire mécaniquement du châssis 1d et traversant le boîtier 20, présente une bague à protubérance sphérique 22 localisée à l'intérieur du boitier 20.

Les ouvertures supérieure 20a et inférieure 20b sont dimensionnées pour autoriser un mouvement du boîtier 20 autour d'un centre de rotation et par conséquent du timon d'attelage 3, selon trois degrés de liberté de rotation. Le timon d'attelage 3 peut ainsi se débattre selon ces trois degrés de liberté de rotation par rapport au châssis 1d.

Le boîtier 20 intègre une interface de rotation enveloppant la bague à protubérance sphérique 22. Cette dernière est par exemple montée en force sur la tige 21. L'interface de rotation comprend avantageusement une entretoise 23, déformable de manière élastique, par exemple en caoutchouc et une douille 24 enveloppant l'entretoise 23. La douille 24 est maintenue dans le boîtier 20 grâce à une bague de serrage 25.

La bague à protubérance sphérique 22 est enserrée longitudinalement sur le châssis 1d par l'intermédiaire d'une tête 21a de la tige 21 à une de ses extrémités et un ensemble de serrage à une autre extrémité filetée 21b traversant une ouverture 1e du châssis 1d.

L'ensemble de serrage comprend un écrou 26 vissé sur l'extrémité filetée 21b et une entretoise 27. L'écrou 26 prenant appui sur le châssis 1d permet ainsi de prendre en sandwich la bague à protubérance sphérique 22 entre la tête 21a et le patin de lacet 27. La tige 21, la bague à protubérance sphérique 22 et l'entretoise 27 sont ainsi fixes par rapport au timon d'attelage 3.

Des patins de lacet 28, que l'on trouve entre la tête 21a et le châssis 1d ainsi qu'entre l'entretoise 27 et le châssis 1d, permettent la rotation en lacet du timon d'attelage 3 par rapport au véhicule 1b suivant l'axe vertical 9 centré sur le mécanisme à rotule 8. Ils réalisent ainsi le dispositif de débattement en lacet 11.

Selon un mode de réalisation, le dispositif de débattement en roulis 10 est prévu dans le timon d'attelage 3 pour autoriser un débattement en roulis du second véhicule routier 1b selon l'axe longitudinal 6 du timon d'attelage 3.

Le dispositif de débattement en lacet 11 comprend par exemple un dispositif d'amortissement en lacet. Le dispositif d'amortissement en lacet comprend un bras 18 solidaire du timon d'attelage 3 avec une première extrémité 18a du bras 18. Le bras 18 est par exemple fixé sur ou d'une seule pièce avec le boîtier 20 et s'étend dans le prolongement de l'extrémité proximale 3a du timon d'attelage 3. Le bras 18 comporte une seconde extrémité 18b reliée au châssis 1d du véhicule 1b correspondant, par l'intermédiaire du dispositif d'amortissement assurant une stabilisation en lacet véhicule attelé 1b par rapport au véhicule tracteur 1a.

Le dispositif d'amortissement en lacet comprend par exemple un vérin hydraulique 19 double effet, d'amortissement, comportant un corps de vérin 19a et une tige de vérin 19b. Le vérin hydraulique 19 est articulé sur le châssis 1d avec une extrémité d'articulation 19a' du corps de vérin 19a et sur la seconde extrémité 18b du bras 18 à l'aide d'une extrémité externe 19b' de la tige de vérin 19b.

L'articulation entre la tige de vérin 19b et le bras 18 comprend avantageusement une rotule 19c pour absorber les amplitudes de mouvement en tangage et en roulis. L'articulation entre l'extrémité d'articulation 19a' et le châssis 1d comprend avantageusement une rotule 19c', pour absorber les amplitudes de mouvement en tangage et en roulis.

Le dispositif d'amortissement en lacet comprend avantageusement un dispositif de réglage de l'intensité de l'amortissement, laquelle est par exemple commandée par la vitesse de déplacement des véhicules attelés 1a, 1b, par exemple de manière progressive et proportionnelle, de sorte à augmenter l'intensité de freinage en lacet lorsqu'ils se déplacent à grande vitesse. L'intensité de l'amortissement résulte directement de la pression interne au vérin hydraulique 19 et/ou des caractéristiques physiques du dispositif d'amortissement.

Le dispositif d'amortissement en lacet comprend également un accumulateur hydraulique 30 contenant un liquide hydraulique 30a par exemple pressurisé à 8 bar et un circuit hydraulique 29 de commande associés au vérin hydraulique 19 double-effet. Le circuit hydraulique 29 de commande et les organes hydrauliques correspondants sont par exemple logés dans un bloc foré 31. Ce dernier communique avec l'accumulateur hydraulique 30 grâce à une conduite 32.

Le dispositif d'attelage 1 comprend avantageusement un système de recentrage du timon d'attelage 3.

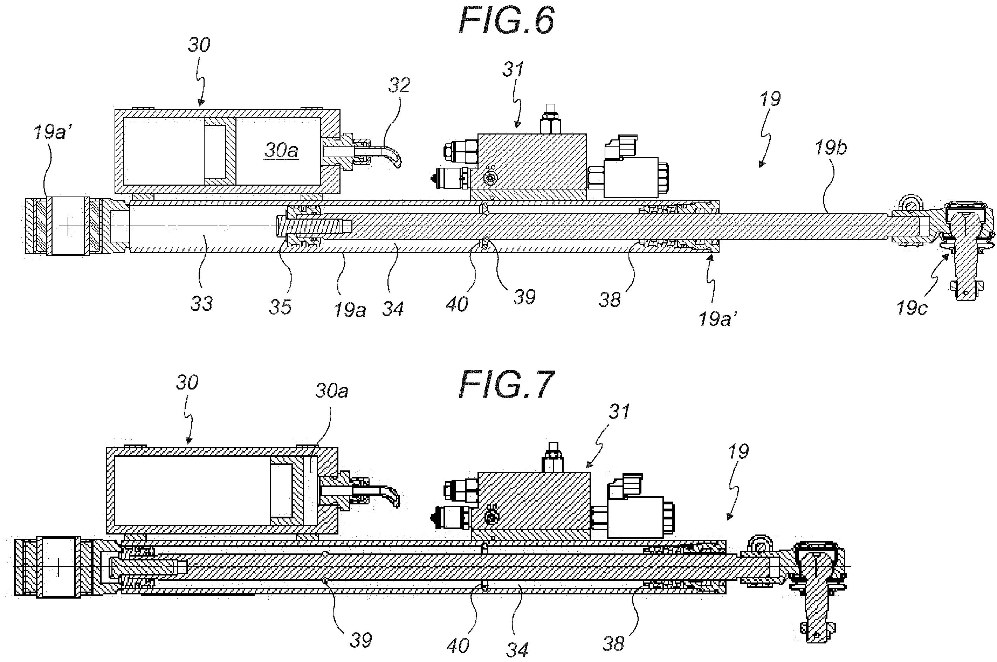

Les figures 6 à 9, sont des vues en coupe du vérin hydraulique 19 d'amortissement d'un dispositif d'attelage 3, avec différents états de fonctionnement pour réaliser d'une part la fonction d'amortissement en lacet et d'autre part la fonction de recentrage du timon 3.

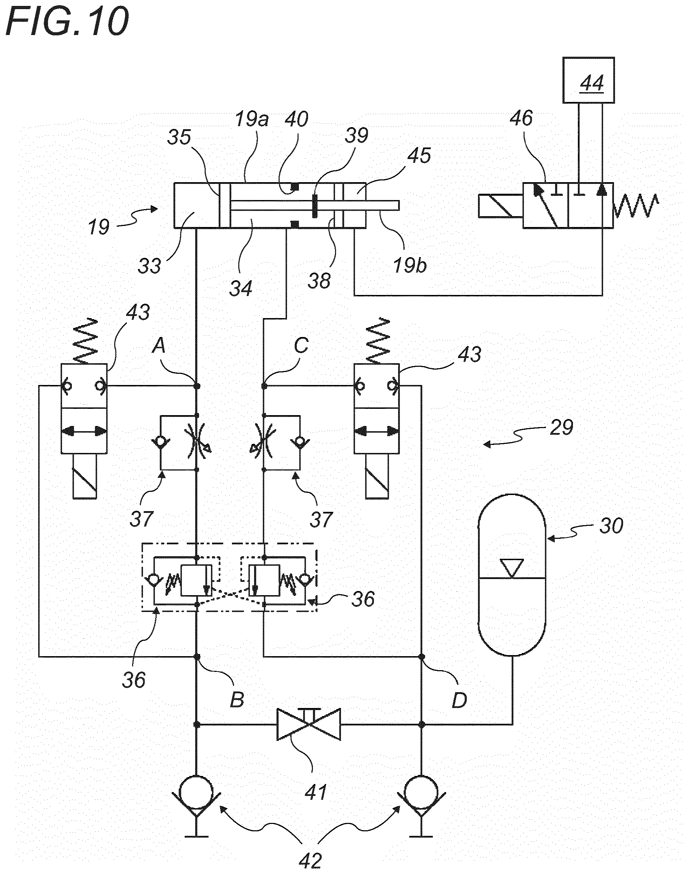

La figure 10, est une illustration du circuit hydraulique 29 pour piloter le fonctionnement du vérin hydraulique 19 d'amortissement du dispositif d'attelage 3.

Afin de mettre en œuvre la fonction d'amortissement en lacet, le vérin hydraulique 19 comporte une grande chambre 33 et une petite chambre 34 séparées par l'intermédiaire d'un piston 35 monté sur une extrémité de la tige19b localisée dans le corps de vérin 19a. La grande chambre 33 et la petite chambre 34 sont maintenues à la même pression par l'intermédiaire de l'accumulateur hydraulique 30.

La grande chambre 33 et la petite chambre 34 sont associées à une valve d'équilibrage 36 et à un limiteur de débit unidirectionnel 37 pour générer un amortissement selon une loi de comportement pression/vitesse dans les deux sens de mouvement de la tige de vérin 19b. Chaque chambre 33 ou 34 communique successivement avec le limiteur de débit unidirectionnel 37 et avec la valve d'équilibrage 36 connectés en série.

Selon un exemple de réalisation, la grande chambre 33 et la petite chambre 34 communiquent entre-elles par l'intermédiaire de l'une des valves d'équilibrage 36 et de l'un des limiteurs de débit unidirectionnel 37. Les valves d'équilibrage 36 sont par exemple tarées à 70 bar et sont unidirectionnelles de manière à être passantes dans un sens au-delà d'une pression seuil déterminée, par exemple 70 bar. Elles sont constamment passantes dans l'autre sens.

Les sorties des valves d'équilibrage 36 sont reliées entre-elles par une vanne-robinet 41. Les sorties des valves d'équilibrage 36 comportent également, en aval de la liaison hydraulique comportant la vanne-robinet 41, des clapets anti-retour 42 matérialisant un raccord rapide pour le remplissage ou la mise à niveau du circuit hydraulique 29. L'accumulateur hydraulique 30 est avantageusement connecté sur le circuit hydraulique 29 par exemple en amont (première entrée) ou en aval (seconde entrée) de la vanne-robinet 41.

La grande chambre 33 est donc reliée à une première entrée de la vanne-robinet 41 par une branche AB du circuit hydraulique 29. La branche AB comprend en respectivement et en série le limiteur de débit unidirectionnel 37 et la valve d'équilibrage 36.

La petite chambre 34 est donc reliée à une seconde entrée de la vanne-robinet 41 par une branche CD du circuit hydraulique 29. La branche CD comprend en respectivement et en série le limiteur de débit unidirectionnel 37 et la valve d'équilibrage 36.

Chacune des branches AB et CD comprend également une branche complémentaire connectée en parallèle et comportant une vanne de dérivation 43. Ces deux vannes de dérivation 43 pilotées automatiquement par l'intermédiaire d'une unité de commande et sont non passantes hormis lors des phases de recentrage du timon 3.

Dans le cadre de la mise en œuvre de la fonction d'amortissement, un mouvement en lacet du timon 3 entrainera un mouvement de la tige 19b et de son piston 35 associé. L'une des chambres 33 ou 34 va être alors en surpression (par exemple au-delà de 70 bar). Lorsque la surpression dépassera la pression seuil, la valve d'équilibrage 36 de la chambre 33 ou 34 correspondante va devenir passante et une partie du liquide hydraulique contenu dans la chambre 33 ou 34 en surpression pourra s'échapper vers l'autre chambre 34 ou 33 via le limiteur de débit unidirectionnel 37 correspondant et via l'autre valve d'équilibrage 36 de l'autre chambre 34 ou 33 dans le sens constamment passant.

Un mouvement du timon 3 dans le sens opposé provoquera une surpression dans l'autre chambre 34 ou 33 et le liquide hydraulique circulera dans l'autre sens, dans la mesure où les branches AB et CD sont identiques et symétriques.

Le fonctionnement est identique lorsque le piston 35 se déplace en réponse à une circulation en courbe des véhicules 1a et1b attelés.

Dans le fonctionnement ci-dessus, il est évident que la vanne-robinet 41 est en position ouverte.
Lorsque la vanne-robinet 41 est ouverte, l'accumulateur hydraulique 30 met à équi-pression la grande chambre 33 et la petite chambre 34.

L'accumulateur 30 permet par ailleurs de compenser les différences de volume entre la grande chambre 33 et la petite chambre 34 lors du déplacement du piston 35 et du transfert de liquide hydraulique d'une chambre à l'autre par les branches AB puis CD ou inversement.

Le système de recentrage comprend avantageusement un piston flottant 38 monté coulissant sur la tige 19b, un anneau 39 solidaire et en saillie sur la tige 19b pour entrainer ledit piston flottant 38 et pour être entrainé par ledit piston flottant 38.

Le piston flottant 38 se déplace entre l'extrémité 19a' du corps de vérin 19a et une butée 40 en saillie interne au corps de vérin 19a, laquelle définie la position centrale et de recentrage du timon 3.

Le système de recentrage comprend également une alimentation hydraulique spécifique 44, alimentant une chambre de recentrage 45 délimitée longitudinalement par l'extrémité 19a' du corps de vérin 19a et par le piston flottant 38. L'alimentation de la chambre de recentrage 45 et le retour du liquide hydraulique dans un réservoir est actionné par l'intermédiaire d'une valve de recentrage 46.

Lors de l'opération de recentrage, l'équi-pression, à savoir une basse pression de 8 bar par exemple, est maintenue dans les chambres 33 et 34 par les vannes de dérivation 43 rendues passantes et connectant l'accumulateur hydraulique 30 directement sur les chambres 33 et 34. Les branches de dérivation AB et CD permettent ainsi de réduire substantiellement les efforts générés par le vérin hydraulique 19 pour procéder à l'opération de recentrage du timon 3. Lorsque les vannes de dérivation 43 sont passantes le vérin hydraulique 19 est libéré et les deux chambres 33 et 34 sont alimentées directement par l'accumulateur hydraulique 30 à faible pression.

Ainsi, la figure 6 correspond à un état dans lequel la tige 19b est centrée et à un timon 3 aligné dans la direction longitudinale du véhicule 1b.

La figure 7 correspond à un état dans lequel la tige 19b est rentrée et à un timon 3 orienté vers la gauche par rapport à la direction longitudinale du véhicule 1b.

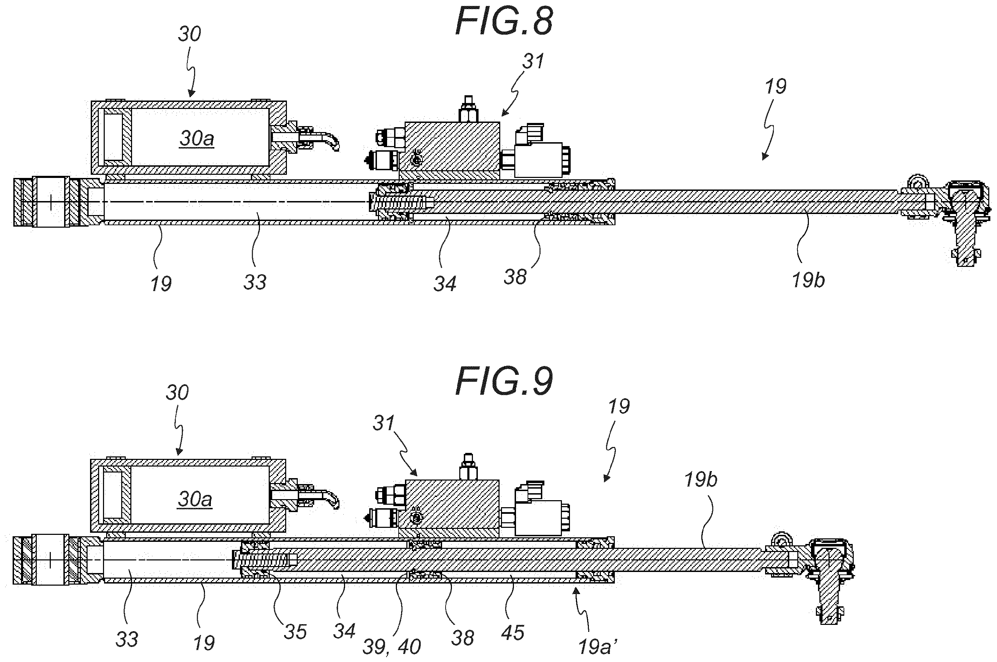

La figure 8 correspond à un état dans lequel la tige 19b est sortie et à un timon 3 orienté vers la droite par rapport à la direction longitudinale du véhicule 1b.

La figure 9 correspond à un état dans lequel la tige 19b est recentrée. Pour mettre en œuvre la fonction de recentrage, les vannes de dérivation 43 sont actionnées et rendues passantes de manière à ce que la grande chambre 33 et la petite chambre 34 communiquent directement entre-elles en passant par les branches de dérivation AB et CD et par la branche comportant la vanne-robinet 41 en position ouverte.

En outre, la chambre de recentrage 45 est alimentée par l'alimentation hydraulique spécifique 44. Cette alimentation conduit alors au coulissement du piston flottant 38 sur la tige 19b.

Lorsque la tige 19b est dans une position sortie au de-là de la position centrale, le piston flottant 38 prend appui sur l'anneau 39 de la tige 19b pour ramener l'ensemble sur la butée 40.

Lorsque la tige 19b est dans une position sortie en de ça de la position centrale, c'est la différence de section entre la grande chambre 33 et la petite chambre 34 qui ramènera la tige 19b en position centrale avec l'anneau 39 qui prend appui sur le piston flottant 38 lui-même en position de recentrage. Cette position de recentrage est donc obtenue automatiquement du fait de l'existence de cette différence de section dans les chambres 33 et 34 et de l'équi-pression régnant dans lesdites chambres 33 et 34 grâce à l'accumulateur hydraulique 30.

Le recentrage du timon 3 est ainsi possible dans toutes les situations et ce de manière remarquablement simple. En effet, l'ajout d'une fonction simple effet au vérin hydraulique 19 suffit pour y arriver.

Lorsque la vanne-robinet 41 est en position fermée, les chambres 33 et 34 ne communiquent plus entre-elles. La position de fermeture de la vanne-robinet 41 est par exemple commandée automatiquement par une unité de commande.

A titre d'exemple, la vanne-robinet 41 est utilisée pour les phases de remplissage et de purge du système hydraulique, afin de pouvoir isoler chaque branche du circuit hydraulique le temps du remplissage dudit circuit. Le blocage du timon d'attelage 3 est réalisé par le dé-pilotage des vannes de dérivation 43 (devenant ainsi non passantes) et les vannes d'équilibrage 36, de par leur tarage, permettent d'immobiliser te timon d'attelage 3.

Selon un mode de réalisation préféré de l'invention, le premier véhicule routier 1a est un véhicule motorisé et tracteur, positionné devant le second véhicule routier 1b, qui est un véhicule suiveur ou tracté.

Le dispositif d'attelage 1 est prévu par exemple pour équiper des véhicules comportant chacun au moins deux essieux 1c. Il s'agit préférentiellement de véhicules destinés au transport de personnes.

Selon un mode de réalisation avantageux, le premier 1a et le second 1b véhicules routiers sont identiques et prévus pour former des attelages d'au moins deux véhicules routiers 1a, 1b à la suite les uns des autres afin de former un train routier. Ainsi, l'invention concerne également un véhicule routier 1a ou 1b unitaire comportant le dispositif d'attelage 1, à savoir le timon d'attelage 3 prévu à une extrémité, par exemple à l'extrémité avant dudit véhicule et la traverse 4 intégrant la chape d'attelage 2 prévue à l'extrémité opposée, par exemple à l'extrémité arrière dudit véhicule.

Il est évident que la présente description ne se limite pas aux exemples explicitement décrits, mais comprend également d'autres modes de réalisation.

## Revendications

1. Dispositif d'attelage (1) apte à être prévu entre un premier (1a) et un second (1b) véhicules routiers pour atteler ces deux véhicules (1a, 1b), ces deux véhicules (1a, 1b) comportant chacun au moins deux essieux (1c), ledit dispositif d'attelage (1) comprenant une traverse (4) comportant une chape d'attelage (2) et apte à équiper le premier véhicule routier (1a), ledit dispositif d'attelage (1) comprenant un timon d'attelage (3) apte à être solidaire du second véhicule routier (1b), cette traverse (4) étant apte à être montée pivotante sur le premier véhicule routier (1a) selon un premier axe horizontal (5) transversal à un axe longitudinal (6) du timon d'attelage (3), par au moins une articulation (4c), le timon d'attelage (3) et la traverse (4) comportant chacun une extrémité proximale (3a, 4a) apte à être fixée à son véhicule respectif (1b, 1a) et une extrémité distale (3b, 4b), ces extrémités distales (3b, 4b) étant prévues pour être mutuellement solidarisées lors de l'attelage des deux véhicules (1a, 1b), ledit dispositif d'attelage (1) comprenant :
- un dispositif de débattement en roulis (10) d'un véhicule par rapport à l'autre ;
- un dispositif de débattement en lacet (11) d'un véhicule par rapport à l'autre ;
- un premier dispositif de débattement en tangage (7) du premier véhicule routier (1a) par rapport à la chape d'attelage (2) ;
- un second dispositif de débattement en tangage (12) du second véhicule routier (1b) par rapport à l'extrémité distale (3b) du timon d'attelage (3), ledit second dispositif de débattement en tangage (12) étant distinct et décalé du premier dispositif de débattement en tangage (7) formé par l'au moins une articulation (4c),
**caractérisé en ce que** le dispositif de débattement en roulis (10), le dispositif de débattement en lacet (11) et le second dispositif de débattement en tangage (12) sont intégrés dans un unique mécanisme à rotule (8).

2. Dispositif d'attelage (1) selon la revendication 1, **caractérisé en ce que** le mécanisme à rotule (8) comprend un boîtier (20) solidaire mécaniquement du timon d'attelage (3) et pourvu d'une ouverture supérieure (20a) et d'une ouverture inférieure (20b), une tige (21) solidaire mécaniquement du châssis (1d) et traversant le boîtier (20), ladite tige (21) présentant une bague à protubérance sphérique (22) localisée à l'intérieur du boitier (20) et les ouvertures supérieure (20a) et inférieure (20b) étant dimensionnées pour autoriser un mouvement du boîtiers (20) selon trois degrés de liberté de rotation.

3. Dispositif d' attelage selon la revendication 2, **caractérisé en ce que** le boîtier (20) intègre une interface de rotation enveloppant la protubérance sphérique (22) comprenant une entretoise (23) élastique et une douille (24) solidaire du boîtier (20) et enveloppant ladite entretoise (23).

4. Dispositif d'attelage (1) selon l'une quelconque des revendications 1 à 3, **caractérisé en ce que** :
- le dispositif de débattement en roulis (10) est prévu dans le timon d'attelage (3) pour autoriser un débattement en roulis du second véhicule routier (1b) dans l'axe longitudinal (6) du timon d'attelage (3),
- le dispositif de débattement en lacet (11) est prévu dans le timon d'attelage (3) pour autoriser un débattement en lacet du second véhicule routier (1b) selon un axe vertical (9) passant par le timon d'attelage (3) et le centre du mécanisme à rotule (8), et
- le second dispositif de débattement en tangage (12) est prévu dans le timon d'attelage (3) pour autoriser un débattement en tangage du second véhicule routier (1b) selon un second axe horizontal (17) transversal à l'axe longitudinal (6) du timon d'attelage (3).

5. Dispositif d'attelage (1) selon l'une quelconque des revendications précédentes, **caractérisé en ce que** le dispositif de débattement en lacet (11) comprend un dispositif d'amortissement en lacet.

6. Dispositif d'attelage (1) selon la revendication précédente, **caractérisé en ce que** le dispositif d'amortissement en lacet comprend un bras (18) solidaire du timon d'attelage (3), articulé avec une extrémité (18a) sur le mécanisme à rotule (8), s'étendant dans le prolongement de l'extrémité proximale (3a) dudit timon d'attelage (3), le bras (18) étant reliée au châssis (1d) du véhicule correspondant (1b) par l'intermédiaire d'un vérin hydraulique (19) double-effet comportant un corps (19a) et une tige (19b).

7. Dispositif d'attelage (1) selon la revendication précédente, **caractérisé en ce que** le dispositif d'amortissement comprend un accumulateur hydraulique (30) et un circuit hydraulique (29) de commande associés au vérin hydraulique (19) double-effet, lequel comporte une grande chambre (33) et une petite chambre (34) séparées par l'intermédiaire d'un piston (35) monté sur une extrémité de la tige (19b), les chambres (33) et (34) communiquant entre-elles par l'intermédiaire d'une valve d'équilibrage (36) et d'un limiteur de débit unidirectionnel (37).

8. Dispositif d'attelage (1) selon l'une quelconque des revendications 1 à 7, **caractérisé en ce qu'**il comprend un système de recentrage du timon d'attelage (3).

9. Dispositif d'attelage selon les revendications 7 et 8, **caractérisé en ce que** le système de recentrage comprend : un piston flottant (38) monté coulissant sur la tige (19b), un anneau (39) solidaire et en saillie sur la tige (19b) pour entrainer le piston flottant (38) et pour être entrainé par le piston flottant (38), ledit piston flottant (38) se déplaçant entre une extrémité (19a') du corps (19a) et une butée interne (40) au corps (19a), définissant la position de recentrage du timon (3), et une alimentation hydraulique spécifique (44) alimentant une chambre de recentrage (45) délimitée longitudinalement par l'extrémité (19a') du corps (19a) et le piston flottant (38).

10. Dispositif d'attelage (1) selon l'une quelconque des revendications précédentes, **caractérisé en ce que** le premier véhicule routier (1a) est un véhicule tracteur et **en ce que** le second véhicule routier (1b) est un véhicule suiveur ou tracté.

11. Ensemble routier comprenant au moins deux véhicules routiers (1a, 1b) identiques ou similaires attelés par l'intermédiaire d'un dispositif d'attelage (1) conforme à l'une quelconque des revendications 1 à 10, chacun des véhicules (1a, 1b) dudit ensemble routier comportant une chape d'attelage (2) à une extrémité avant ou arrière et un timon d'attelage (3) à l'extrémité opposée.

12. Véhicule routier (1a, 1b) comportant un dispositif d'attelage selon l'une quelconque des revendications 1 à 10, comportant un timon d'attelage (3) à l'avant et une chape d'attelage (2) à l'arrière.

## Patentansprüche

1. Kupplungsvorrichtung (1), die zwischen einem ersten (1a) und einem zweiten (1b) Straßenfahrzeug vorgesehen ist, um diese beiden Fahrzeuge (1a, 1b) miteinander zu verbinden, wobei diese beiden Fahrzeuge (1a, 1b) jeweils mindestens zwei Achsen (1c) aufweisen, die Kupplungsvorrichtung (1) einen Querträger (4) umfasst, der eine Maulkupplung (2) aufweist und für das erste Straßenfahrzeug (1a) geeignet ist, die Kupplungsvorrichtung (1) eine Kupplungsdeichsel (3) umfasst, die fest mit dem zweiten Straßenfahrzeug (1b) verbunden werden kann, und dieser Querträger (4) an dem ersten Straßenfahrzeug (1a) durch mindestens ein Gelenk (4c) an einer ersten horizontalen Achse (5) entlang, quer zu einer Längsachse (6) der Kupplungsdeichsel (3), schwenkbar angebracht werden kann, die Kupplungsdeichsel (3) und der Querträger (4) jeweils ein proximales Ende (3a, 4a) zur Befestigung an dem jeweiligen Fahrzeug (1b, 1a) und ein distales Ende (3b, 4b) aufweisen, wobei diese distalen Enden (3b, 4b) dazu vorgesehen sind, beim Ankuppeln der beiden Fahrzeuge (1a, 1b) fest miteinander verbunden werden, wobei die Kupplungsvorrichtung (1) Folgendes umfasst:
- eine Wankauslenkungsvorrichtung (10) eines Fahrzeugs im Verhältnis zum anderen;
- eine Gierauslenkungsvorrichtung (11) eines Fahrzeugs im Verhältnis zum anderen;
- eine erste Nickauslenkungsvorrichtung (7) des ersten Straßenfahrzeugs (1a) in Bezug auf die Maulkupplung (2);
- eine zweite Nickauslenkungsvorrichtung (12) des zweiten Straßenfahrzeugs (1b) in Bezug auf das distale Ende (3b) der Kupplungsdeichsel (3), wobei die zweite Nickauslenkungsvorrichtung (12) von der ersten Nickauslenkungsvorrichtung (7), die durch das mindestens eine Gelenk (4c) gebildet wird, getrennt und versetzt ist,
**dadurch gekennzeichnet, dass** die Wankauslenkungsvorrichtung (10), die Gierauslenkungsvorrichtung (11) und die zweite Nickauslenkungsvorrichtung (12) in einem einzigen Kugelgelenkmechanismus (8) integriert sind.

2. Kupplungsvorrichtung (1) nach Anspruch 1, **dadurch gekennzeichnet, dass** der Kugelgelenkmechanismus (8) ein Gehäuse (20) umfasst, das mechanisch fest mit der Kupplungsdeichsel (3) verbunden ist und mit einer oberen Öffnung (20a) und einer unteren Öffnung (20b) versehen ist, eine Stange (21), die mechanisch fest mit dem Rahmen (1d) verbunden ist und durch das Gehäuse (20) verläuft, wobei die Stange (21) einen kugelförmigen Ring mit einem Vorsprung (22) aufweist, der im Gehäuses (20) lokalisiert ist, und die obere (20a) und untere (20b) Öffnung so dimensioniert sind, dass sie eine Bewegung des Gehäuses (20) in drei Freiheitsgraden der Rotation ermöglichen.

3. Kupplungsvorrichtung nach Anspruch 2, **dadurch gekennzeichnet, dass** zum Gehäuse (20) eine Rotationschnittstelle gehört, die den kugelförmigen Vorsprung (22) umhüllt, die einen elastischen Abstandshalter (23) und eine Hülse (24) umfasst, die fest mit dem Gehäuse (20) verbunden ist und den Abstandshalter (23) umhüllt.

4. Kupplungsvorrichtung (1) nach einem der Ansprüche 1 bis 3, **dadurch gekennzeichnet, dass**:
die Wankauslenkungsvorrichtung (10) in der Kupplungsdeichsel (3) vorgesehen ist, um eine Wankauslenkung des zweiten Straßenfahrzeugs (1b) in der Längsachse (6) der Kupplungsdeichsel (3) zuzulassen,
die Gierauslenkungvorrichtung (11) in der Kupplungsdeichsel (3) vorgesehen ist, um eine Gierauslenkung des zweiten Straßenfahrzeugs (1b) an einer vertikalen Achse (9) entlang zu ermöglichen, die durch die Kupplungsdeichsel (3) und die Mitte des Kugelgelenkmechanismus (8) verläuft, und
die zweite Nickauslenkungsvorrichtung (12) in der Kupplungsdeichsel (3) vorgesehen ist, um eine Nickauslenkung des zweiten Straßenfahrzeugs (1b) an einer zweiten horizontalen Achse (17) entlang, quer zur Längsachse (6) der Kupplungsdeichsel (3) zuzulassen.

5. Kupplungsvorrichtung (1) nach einem der vorhergehenden Ansprüche, **dadurch gekennzeichnet, dass** die Gierauslenkungsvorrichtung (11) eine Gierdämpfungsvorrichtung umfasst.

6. Kupplungsvorrichtung (1) nach dem vorhergehenden Anspruch, **dadurch gekennzeichnet, dass** die Gierdämpfungsvorrichtung einen Arm (18) umfasst, der fest mit der Kupplungsdeichsel (3) verbunden ist, mit einem Ende (18a) an dem Kugelgelenkmechanismus (8) angelenkt ist und sich in der Verlängerung des proximalen Endes (3a) der Kupplungsdeichsel (3) erstreckt, wobei der Arm (18) über einen doppeltwirkenden Hydraulikzylinder (19), der einen Körper (19a) und eine Stange (19b) aufweist, mit dem Rahmen (1d) des entsprechenden Fahrzeugs (1b) verbunden ist.

7. Kupplungsvorrichtung (1) nach dem vorhergehenden Anspruch, **dadurch gekennzeichnet, dass** die Dämpfungsvorrichtung einen hydraulischen Speicher (30) und einen hydraulischen Steuerkreis (29) umfasst, die dem doppeltwirkenden Hydraulikzylinder (19) zugeordnet sind, der eine große Kammer (33) und eine kleine Kammer (34) aufweist, die über einen an einem Ende der Stange (19b) angebrachten Kolben (35) voneinander getrennt sind, wobei die Kammern (33) und (34) über ein Ausgleichsventil (36) und einen unidirektionalen Durchflussbegrenzer (37) miteinander in Verbindung stehen.

8. Kupplungsvorrichtung (1) nach einem der Ansprüche 1 bis 7, **dadurch gekennzeichnet, dass** sie ein System zur Neuzentrierung der Kupplungsdeichsel (3) umfasst.

9. Kupplungsvorrichtung nach den Ansprüchen 7 und 8, **dadurch gekennzeichnet, dass** das Nachzentriersystem Folgendes umfasst: einen schwimmenden Kolben (38), der auf der Stange (19b) verschiebbar montiert ist, einen Ring (39), der fest mit der Stange (19b) verbunden ist und hervorsteht, um den schwimmenden Kolben (38) anzutreiben und um von dem schwimmenden Kolben (38) angetrieben zu werden, wobei sich der schwimmende Kolben (38) zwischen einem Ende (19a') des Körpers (19a) und einem inneren Anschlag (40) am Körper (19a) verschiebt und die Nachzentrierposition der Deichsel (3) festlegt, und eine spezifische Hydraulikversorgung (44), die eine Nachzentrierkammer (45) versorgt, die in Längsrichtung durch das Ende (19a') des Körpers (19a) und den schwimmenden Kolben (38) begrenzt wird.

10. Kupplungsvorrichtung (1) nach einem der vorhergehenden Ansprüche, **dadurch gekennzeichnet, dass** das erste Straßenfahrzeug (1a) ein Zugfahrzeug ist und dass das zweite Straßenfahrzeug (1b) ein nachfolgendes oder gezogenes Fahrzeug ist.

11. Fahrzeuggespann mit mindestens zwei gleichen oder ähnlichen Straßenfahrzeugen (1a, 1b), die über eine Kupplungsvorrichtung (1) nach einem der Ansprüche 1 bis 10 gekoppelt sind, wobei jedes der Fahrzeuge (1a, 1b) des Fahrzeuggespanns an einem vorderen oder hinteren Ende eine Maulkupplung (2) und am gegenüberliegenden Ende eine Kupplungsdeichsel (3) aufweist.

12. Straßenfahrzeug (1a, 1b) mit einer Kupplungsvorrichtung nach einem der Ansprüche 1 bis 10, die vorne eine Kupplungsdeichsel (3) und hinten eine Maulkupplung (2) aufweist.

## Claims

1. A coupling device (1) capable of being provided between a first (1a) and a second (1b) road vehicle for coupling these two vehicles (1a, 1b), these two vehicles (1a, 1b) each comprising at least two axles (1c), said coupling device (1) comprising a cross-member (4) comprising a coupling clevis (2) and capable of equipping the first road vehicle (1a), said coupling device (1) comprising a coupling drawbar (3) capable of being secured to the second road vehicle (1b), this cross-member (4) being able to be pivotally mounted on the first road vehicle (1a) along a first horizontal axis (5) transverse to a longitudinal axis (6) of the coupling drawbar (3), by at least one hinge (4c), the coupling drawbar (3) and the cross-member (4) each comprising a proximal end (3a, 4a) able to be fixed to its respective vehicle (1b, 1a) and a distal end (3b, 4b), these distal ends (3b, 4b) being provided to be mutually secured during the coupling of the two vehicles (1a, 1b), said coupling device (1) comprising:
- a device (10) for rolling deflection of one vehicle with respect to the other;
- a device (11) for yawing deflection of one vehicle with respect to the other;
- a first device (7) for pitching deflection of the first road vehicle (1a) relative to the coupling clevis (2);
- a second device (12) for pitching deflection of the second road vehicle (1b) relative to the distal end (3b) of the coupling drawbar (3), said second pitching movement device (12) being separate from and offset from the first pitching deflection device (7) formed by the at least one hinge (4c),
**characterised in that** the rolling deflection device (10), the yawing deflection device (11) and the second pitching deflection device (12) are integrated into a single ball-joint mechanism (8).

2. The coupling device (1) according to claim 1, **characterised in that** the ball-joint mechanism (8) comprises a housing (20) mechanically secured to the coupling drawbar (3) and provided with an upper opening (20a) and a lower opening (20b), a rod (21) mechanically secured to the frame (1d) and passing through the housing (20), said rod (21) having a spherical protrusion ring (22) located inside the housing (20) and the upper (20a) and lower (20b) openings being dimensioned to allow a movement of the housing (20) according to three degrees of freedom of rotation.

3. The coupling device according to claim 2, **characterised in that** the housing (20) incorporates a rotation interface surrounding the spherical protuberance (22) comprising an elastic spacer (23) and a bush (24) secured to the housing (20) and surrounding the said spacer (23).

4. The coupling device (1) according to any one of claims 1 to 3, **characterised in that**:
- the rolling deflection device (10) is provided in the coupling drawbar (3) to allow a rolling deflection of the second road vehicle (1b) in the longitudinal axis (6) of the coupling drawbar (3),
- the yawing deflection device (11) is provided in the coupling drawbar (3) to allow a yawing deflection of the second road vehicle (1b) along a vertical axis (9) passing through the coupling drawbar (3) and the center of the ball-joint mechanism (8), and
- the second pitching deflection device (12) is provided in the coupling drawbar (3) to allow a pitching deflection of the second road vehicle (1b) along a second horizontal axis (17) transverse to the longitudinal axis (6) of the coupling drawbar (3).

5. The coupling device (1) according to any one of the preceding claims, **characterised in that** the yawing deflection device (11) comprises a yawing damping device.

6. The coupling device (1) according to the preceding claim, **characterised in that** the yawing damping device comprises an arm (18) secured to the coupling drawbar (3), hinged with one end (18a) to the ball-joint mechanism (8), extending in the extension of the proximal end (3a) of said coupling drawbar (3), the arm (18) being connected to the frame (1d) of the corresponding vehicle (1b) via a double-acting hydraulic cylinder (19) comprising a body (19a) and a rod (19b).

7. The coupling device (1) according to the preceding claim, **characterised in that** the damping device comprises a hydraulic accumulator (30) and a hydraulic control circuit (29) associated with the double-acting hydraulic cylinder (19), which comprises a large chamber (33) and a small chamber (34) separated by means of a piston (35) mounted on one end of the rod (19b), the chambers (33) and (34) communicating with each other via a balancing valve (36) and a unidirectional flow rate limiter (37).

8. The coupling device (1) according to any one of claims 1 to 7, **characterised in that** it comprises a system for recentering the coupling drawbar (3).

9. The coupling device according to claims 7 and 8, **characterised in that** the recentering system comprises: a floating piston (38) slidably mounted on the rod (19b), a ring (39) secured to and projecting from the rod (19b) for driving the floating piston (38) and for being driven by the floating piston (38), said floating piston (38) moving between an end (19a') of the body (19a) and a stop (40) internal to the body (19a), defining the recentering position of the drawbar (3), and a specific hydraulic supply (44) supplying a recentering chamber (45) longitudinally delimited by the end (19a') of the body (19a) and the floating piston (38).

10. The coupling device (1) according to any one of the preceding claims, **characterised in that** the first road vehicle (1a) is a towing vehicle and **in that** the second road vehicle (1b) is a following or towed vehicle.

11. A road assembly comprising at least two identical or similar road vehicles (1a, 1b) coupled by means of a coupling device (1) according to any one of claims 1 to 10, each of the vehicles (1a, 1b) of said road assembly comprising a coupling clevis (2) at a front or rear end and a coupling drawbar (3) at the opposite end.

12. A road vehicle (1a, 1b) comprising a coupling device according to any one of claims 1 to 10, comprising a coupling drawbar (3) at the front and a coupling clevis (2) at the rear.
